# EUROPEAN PATENT APPLICATION

(11) **EP 3 144 274 A1**
(43) Date of publication of application: **22.03.2017**
(21) Application number: 15186043.4
(22) Date of filing: 21.09.2015
(51) Int. Cl.: C01B 3/38

(54) **METHOD OF OPERATING A CATALYTIC STREAM-HYDROCARBON REFORMER**

(71) Applicant: AIR PRODUCTS AND CHEMICALS, INC., Allentown, PA 18195-1501 (US)
(72) Inventor: Jin, Bo, Orefield, PA Pennsylvania 18069 (US); Li, Xianming Jimmy, Orefield, PA Pennsylvania 18069 (US); Lunsford, Jeremy Charles, Minneapolis, MN Minnesota 55419 (US)
(74) Representative: Schwabe - Sandmair - Marx

(57) **Abstract**

Method of operating a catalytic steam-hydrocarbon reformer where the steam flow rate at which carbon forms on the inner wall of a catalyst-containing reformer tube is determined, and the steam flow rate to the catalytic steam-hydrocarbon reformer is controlled responsive to the determined steam flow rate at which carbon forms on the inner wall of the catalyst-containing reformer tube.

## Description

### BACKGROUND

Hydrogen and/or synthesis gas production by catalytic steam-hydrocarbon reforming, also called steam reforming, steam-methane reforming or SMR, is well-known and is carried out in a reactor called a reformer. The reforming reaction is an endothermic reaction and may be described generally as CₙHₘ + n H₂O → n CO + (m/2 + n) H₂. Hydrogen is generated when synthesis gas is generated. The process, being endothermic, is an energy intensive process. Since energy costs are a significant part of the operating cost, the hydrogen production industry desires to improve the thermal efficiency of the reformer operation.

Steam is one of the reactants in the reforming reaction. In catalytic steam-hydrocarbon reformers, a hydrocarbon-containing feedstock is combined with the steam at a mixing Tee to form a mixed feed. The mixed feed is heated and passed to reformer tubes in a fired tubular reformer to undergo the reforming reaction. The mixed feed may first be passed to a so-called prereformer prior to reaction in the reformer tubes.

The steam provided for the reforming reaction is typically called process steam, distinguished from export steam, which is exported from the reforming plant as a product. The amount of process steam used is a key operating parameter for the catalytic steam-hydrocarbon process. On the one hand, the thermal efficiency of the catalytic steam-hydrocarbon reformer increases as the amount of process steam decreases due to reduced waste heat losses. On the other hand, the propensity for carbon formation on the catalyst in the reformer tubes increases as the amount of process steam decreases below a critical value.

The prior art teaches that when carbon is formed in the catalyst-containing reformer tubes, the carbon forms on or in the catalyst. Carbon formation deactivates and/or disintegrates the reforming catalyst, causing undesired pressure drop through the reformer tubes and/or overheating of the tubes. If the catalyst is deactivated and/or disintegrated, hydrogen production must be interrupted in order to regenerate or replace the catalyst. Consequently, the amount of process steam used is generally greater than what is needed for the reforming reaction to avoid carbon formation.

In industrial practice, the amount of process steam used is controlled using a parameter called the "steam-to-carbon molar ratio," also called simply the "steam-to-carbon ratio" and abbreviated "S/C." The steam-to-carbon molar ratio of the feed is the ratio of the molar flow rate of steam in the feed to the molar flow rate of hydrocarbon-based carbon in the feed.

Setting and controlling the steam-to-carbon ratio is important for catalytic steam-hydrocarbon reformer operation. Ideally, operators want to operate with a steam-to-carbon ratio at the lowest suitable value such that the reformer operates at its highest efficiency with no risk of carbon formation on the reforming catalyst.

WO 2013/002752 describes a method for setting and controlling the steam flow depending on the propensity of carbon formation on or in the catalyst pellets.

### BRIEF SUMMARY

There are several aspects of the invention as outlined below. In the following, specific aspects of the invention are outlined below. The reference numbers and expressions set in parentheses are referring to an example embodiment explained further below with reference to the figures. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.
Aspect 1. A method of operating a catalytic steam-hydrocarbon reformer, the method comprising:
   introducing a reformer feed gas mixture (15) comprising at least one hydrocarbon and steam into a catalyst-containing reformer tube (202) in a reformer furnace (201), the reformer feed gas mixture (15) having a hydrocarbon-based carbon flow rate and a steam flow rate where the steam flow rate relative to the hydrocarbon-based carbon flow rate in the reformer feed gas mixture can be changed, reacting the reformer feed gas mixture in a reforming reaction under reaction conditions effective to form a reformate (25) comprising H₂, CO, CH₄, and H₂O, and withdrawing the reformate (25) from the catalyst-containing tube (202);
   combusting a fuel (35, 82) with an oxidant gas (99) in a combustion section (203) of the reformer furnace (201) external to the catalyst-containing reformer tube (202) under conditions effective to combust the fuel (35, 82) to form a combustion product gas (100) and generate heat to supply energy for reacting the reformer feed gas mixture (15) inside the catalyst-containing reformer tube (202), and withdrawing the combustion product gas (100) from the combustion section (203);
   determining a steam flow rate at which carbon forms on an inner wall segment of the catalyst-containing reformer tube (202) at a first hydrogen production rate; and
   controlling the steam flow rate responsive to determining the steam flow rate at which carbon forms on the inner wall segment of the catalyst-containing reformer tube (202).
Aspect 2. The method of aspect 1 wherein the reformer feed gas mixture (15) is reacted as a process gas in the catalyst-containing reformer tube (202); and
   wherein the step of determining the steam flow rate at which carbon forms on the inner wall segment of the catalyst-containing reformer tube (202) comprises:
   measuring a temperature of the process gas at a first location inside the catalyst-containing reformer tube (202) proximate the inner wall segment;
   measuring a temperatures on an outer wall of the catalyst-containing reformer tube (202) at a second location proximate the inner wall segment; and
   evaluating the temperature of the process gas at the first location and the temperature on the outer wall at the second location for temperatures indicative of carbon formation on the inner wall segment of the catalyst-containing reformer tube (202).
Aspect 3. The method of aspect 1 or aspect 2 wherein the reformer feed gas mixture (15) is reacted as a process gas in the catalyst-containing reformer tube (202); and
   wherein the step of determining the steam flow rate at which carbon forms on the inner wall segment of the catalyst-containing reformer tube (202) comprises:
   measuring a sequence of temperatures of the process gas at a first location inside the catalyst-containing reformer tube (202) proximate the inner wall segment responsive to changes in the steam flow rate relative to the hydrocarbon-based carbon flow rate;
   measuring a sequence of temperatures on an outer wall of the catalyst-containing reformer tube (202) at a second location proximate the inner wall segment responsive to the changes in the steam flow rate relative to the hydrocarbon-based carbon flow rate; and
   evaluating the sequence of temperatures of the process gas at the first location and the sequence of temperatures on the outer wall at the second location for temperatures indicative of carbon formation on the inner wall segment of the catalyst-containing reformer tube (202).
Aspect 4. The method of aspect 2 or aspect 3 wherein the first location and the second location are within a distance one from the other of at most 0.5 m or at most 0.3 m and/or at most 10% or at most 5% of the length of the catalyst-containing reformer tube (202).
Aspect 5. The method of any one of aspects 2 to 4 wherein the temperatures indicative of carbon formation on the inner wall segment of the catalyst-containing reformer tube (202) comprise a wall temperature exceeding a process gas temperature by greater than a selected difference while the process gas temperature is less than a selected value.
Aspect 6. The method of any one of the claims 2 to 5 wherein the first location and the second location are within a distance one from the other of at most 0.5 m and/or at most 10% of the length of the catalyst-containing reformer tube (202), the distance being measured as a straight-line distance between the first location and the second location.
Aspect 7. The method of any one of the claims 2 to 5 wherein the first location and the second location are within a distance one from the other of at most 0.3 m and/or at most 5% of the length of the catalyst-containing reformer tube (202), the distance being measured as a straight-line distance between the first location and the second location.
Aspect 8. The method of any one of aspects 2 to 7
   wherein a first subsequence of temperatures of the process gas is measured at the first location inside the catalyst-containing reformer tube (202) during a first time period when a first quantity of the reformer feed gas mixture (15) is introduced into the catalyst-containing reformer tube (202), the first quantity of the reformer feed gas mixture (15) having a steam-to-carbon molar ratio with a first mean value, the sequence of temperatures of the process gas comprising the first subsequence of temperatures of the process gas;
   wherein a first subsequence of temperatures on the outer wall of the catalyst-containing reformer tube (202) is measured at the second location during the first time period when the first quantity of the reformer feed gas mixture (15) is introduced into the catalyst-containing reformer tube (202), the sequence of temperatures on the outer wall comprising the first subsequence of temperatures on the outer wall;
   wherein during the first time period, the first subsequence of temperatures on the outer wall of the catalyst-containing reformer tube (202) exceed the first subsequence of temperatures of the process gas by an amount indicative of no carbon formation on the inner wall segment of the catalyst-containing reformer tube (202), and the first subsequence of temperatures of the process gas are within a range indicative of no carbon formation on the inner wall segment of the catalyst-containing reformer tube (202);
   wherein a second subsequence of temperatures of the process gas is measured at the first location inside the catalyst-containing reformer tube (202) during a second time period when a second quantity of the reformer feed gas mixture (15) is introduced into the catalyst-containing reformer tube, the second quantity of the reformer feed gas mixture (15) having a steam-to-carbon molar ratio with a second mean value, the second mean value less than the first mean value, the sequence of temperatures of the process gas comprising the second subsequence of temperatures of the process gas;
   wherein a second subsequence of temperatures on the outer wall of the catalyst-containing reformer tube (202) is measured at the second location during the second time period when the second quantity of the reformer feed gas mixture (15) is introduced into the catalyst-containing reformer tube (202), the sequence of temperatures on the outer wall comprising the second subsequence of temperatures on the outer wall; and
   wherein during the second time period, the second subsequence of temperatures on the outer wall of the catalyst-containing reformer tube (202) exceed the second subsequence of temperatures of the process gas by an amount indicative of carbon formation on the inner wall segment of the catalyst-containing reformer tube (202), and the second subsequence of temperatures of the process gas are within a range indicative of carbon formation on the inner wall segment of the catalyst-containing reformer tube (202) thereby determining the steam flow rate at which carbon forms on the inner wall segment of the catalyst-containing reformer tube (202).
Aspect 9. The method of aspect 8 wherein the steam flow rate is controlled in the step of controlling the steam flow rate during a third time period when a third quantity of the reformer feed gas mixture (15) is introduced into the catalyst-containing reformer tube (202), the third quantity of the reformer feed gas mixture having a steam-to-carbon molar ratio with a third mean value, where the third mean value is greater than or equal to the second mean value and less than or equal to the second mean value plus 0.2.
Aspect 10. The method of any one of the preceding aspects further comprising:
   separating a pressure swing adsorption unit feed in a pressure swing adsorption unit (501) to form a hydrogen-containing product gas (30) and a pressure swing adsorption unit by-product gas (82), where the adsorption unit feed is formed from at least a portion of the reformate (25) from the catalyst-containing tube and where the fuel comprises at least a portion of the pressure swing adsorption unit by-product gas.

### BRIEF DESCRIPTION OF SEVERAL VIEWS OF THE DRAWINGS

FIG. 1 is a process flow diagram for a hydrogen production facility.
FIG. 2 is a graph with a plot of process gas temperatures and a plot of tube wall temperatures for an operating reformer furnace.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein, "first," "second," "third," etc. are used to distinguish from among a plurality of steps and/or features, and is not indicative of the total number, or relative position in time and/or space unless expressly stated as such.

As used herein, the term "catalyst" refers to a support, catalytic material, and any other additives which may be present on the support.

Illustrative embodiments of the invention are described below. While the invention is susceptible to various modifications and alternative forms, specific embodiments thereof have been shown by way of example in the drawings and are herein described in detail. It should be understood, however that the description herein of specific embodiments is not intended to limit the invention to the particular forms disclosed, but on the contrary, the invention is to cover all modifications, equivalents, and alternatives falling within the scope of the invention as defined by the appended claims.

For the purposes of simplicity and clarity, detailed descriptions of well-known devices, circuits, and methods are omitted so as not to obscure the description of the present invention with unnecessary detail.

The present invention relates to a method of operating a catalytic steam-hydrocarbon reformer. Catalytic steam-hydrocarbon reformers are used in industry for the production industrial hydrogen, methanol, and/or ammonia.

The method utilizes catalytic steam-hydrocarbon reforming. Catalytic steam-hydrocarbon reforming, also called steam methane reforming (SMR), catalytic steam reforming, or steam reforming, is defined as any process used to convert reformer feedstock into reformate by reaction with steam over a catalyst. Reformate, also called synthesis gas, or simply syngas, as used herein is any mixture comprising hydrogen and carbon monoxide. The reforming reaction is an endothermic reaction and may be described generally as CₙHₘ + n H₂O → n CO + (m/2 + n) H₂. Hydrogen is generated when reformate is generated.

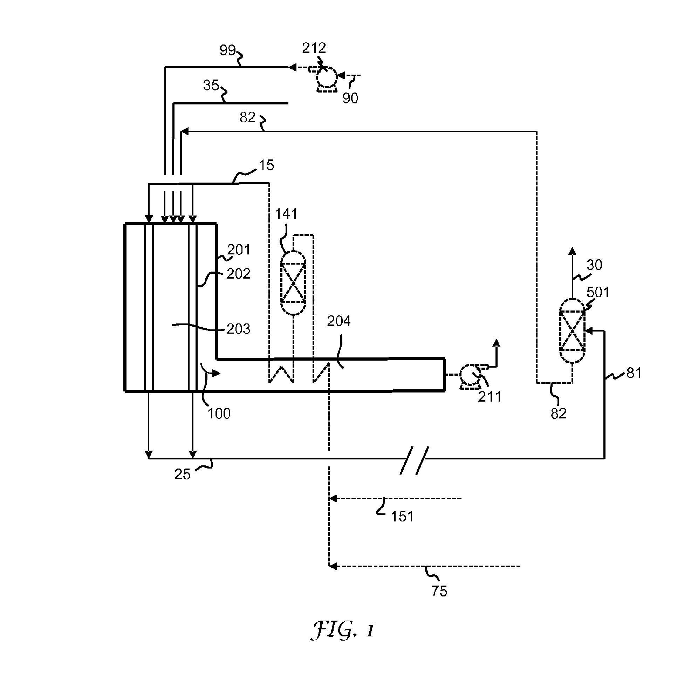

The method is described with reference to the FIG. 1 showing a process flow diagram.

The method comprises introducing a reformer feed gas mixture 15 comprising at least one hydrocarbon and steam into a catalyst-containing reformer tube 202 in a reformer furnace 201. The reformer feed gas mixture 15 has a hydrocarbon-based carbon flow rate and a steam flow rate where the steam flow rate relative to the hydrocarbon-based carbon flow rate in the reformer feed gas mixture can be changed or varied. The reformer feed gas mixture is reacted in a reforming reaction under reaction conditions effective to form a reformate 25 comprising H₂, CO, CH₄, and H₂O, and the reformate 25 is withdrawn from the catalyst-containing tube 202.

The reformer feed gas mixture 15 may be any feed gas mixture suitable for introducing into a catalytic steam-hydrocarbon reformer for forming a reformate. The reformer feed gas mixture 15 comprises at least one hydrocarbon and steam. The at least one hydrocarbon may be methane. The reformer feed gas mixture 15 is formed from a reformer feed 75 and steam 151. The reformer feed may be hydrogenated in a hydrogenator (not shown). The reformer feed may be desulphurized in a hydrodesulphurization unit (not shown) with hydrogen added for hydrodesulphurization. Hydrogen for hydrogentation and/or hydrodesulphurization may be provided from a hydrogen-containing product gas 30, for example from a pressure swing adsorption unit 501. The reformer feed gas mixture may be prereformed; formed by reacting the reformer feed 75 and steam 151 in a prereformer 141. The reformer feed 75 may be formed from a hydrocarbon feed, which may be natural gas, methane, naphtha, propane, refinery fuel gas, refinery off-gas, other suitable hydrocarbon feed known in the art, or combinations thereof.

The reforming reaction takes place inside the catalyst-containing reformer tube 202 in reformer furnace 201. The reformer feed gas mixture is reacted in this reforming reaction under reaction conditions thereby forming a process gas within the catalyst-containing reformer tube. The process gas may in particular contain hydrogen formed in the reforming reaction in the catalyst-containing reformer tube. A reformer furnace, also called a catalytic steam reformer, steam methane reformer, and steam-hydrocarbon reformer, is defined herein as any fuel-fired furnace used to convert feedstock containing elemental hydrogen and carbon into reformate by a reaction with steam over a catalyst with heat provided by combustion of a fuel.

Reformer furnaces with a plurality of catalyst-containing reformer tubes, i.e. tubular reformers, are well-known in the art. Any suitable number of catalyst-containing reformer tubes may be used in the reformer furnace. Suitable materials and methods of construction are known. Catalyst in the catalyst-containing reformer tubes may be any suitable catalyst known in the art, for example, a supported catalyst comprising nickel.

The method may be applied or carried out using a single catalyst-containing reformer tube of a plurality of catalyst-containing reformer tubes or using multiple catalyst-containing reformer tubes in the reformer furnace.

The reaction conditions effective to form the reformate 25 in the catalyst-containing reformer tube 202 may comprise a temperature ranging from 500°C to 1000°C and a pressure ranging from 203 kPa to 5,066 kPa (absolute). The reaction condition temperature may be as measured by any suitable temperature sensor, for example a type J thermocouple. The reaction condition pressure may be as measured by any suitable pressure sensor known in the art, for example a pressure gauge as available from Mensor.

The hydrocarbon-based carbon flow rate may be a molar flow rate or a mass flow rate. The steam flow rate may be a molar flow rate or a mass flow rate.

The hydrocarbon-based carbon flow rate is the flow rate of hydrocarbon-based carbon, i. e. the flow rate of all carbon present in the respective process stream as a constituent of a hydrocarbon. For example, the molar flow rate of hydrocarbon-based carbon is the molar flow rate of all carbon which is a constituent of any hydrocarbon (i.e. excluding carbon associated with carbon monoxide and carbon dioxide) present in the respective process stream. For example, if the total molar flow rate of process stream 15 is 100 moles/h, and the mole fraction of methane is 0.35, the mole fraction of ethane is 0.1, and the mole fraction of carbon monoxide is 0.05, then the molar flow rate of hydrocarbon-based carbon is 55 moles/h. Methane contributes 35 moles/h of hydrocarbon based carbon. Ethane contributes 20 moles/h of hydrocarbon-based carbon. And carbon monoxide contributes zero moles/h of hydrocarbon based carbon. The mass flow rate of hydrocarbon-based carbon is analogously calculated.

The method comprises combusting a fuel 35, 82 with an oxidant gas 99 in a combustion section 203 of the reformer furnace 201 external to the catalyst-containing reformer tube 202. The fuel is combusted under conditions effective to combust the fuel 35, 82 to form a combustion product gas 100 and generate heat to supply energy for reacting the reformer feed gas mixture 15 inside the catalyst-containing reformer tube 202. The combustion product gas 100 is then withdrawn from the combustion section 203 of the reformer furnace 201.

Any suitable burner may be used to introduce the fuel 82, 35 and the oxidant gas 99 into the combustion section 203. Combustion of the fuel 82, 35 with the oxidant gas 99 generates heat to supply energy for reacting the reformer feed gas mixture 15 inside the plurality of catalyst-containing reformer tubes 202. The combustion product gas 100 is withdrawn from the combustion section 203 of the reformer furnace 201 and passed to the convection section 204 of the reformer furnace 201 to supply heat to other process streams. The combustion section (also called the radiant, radiation, or radiative section) of the reformer furnace is that part of the reformer furnace containing the plurality of catalyst-containing reformer tubes 202. The convection section of the reformer furnace is that part of the reformer furnace containing heat exchangers other than the plurality of catalyst-containing reformer tubes. The heat exchangers in the convection section may be for heating process fluids other than reformate from the plurality of catalyst-containing reformer tubes, such as water/steam, air, pressure swing adsorption unit by-product gas, reformer feed gas mixture prior to introduction into the catalyst-containing reformer tubes, prereformed reformer feed gas, etc. The convention section may also, if desired, contain a convective prereformer.

Furnace conditions effective to combust the fuel may comprise a furnace temperature ranging from 600°C to 1500°C and a pressure ranging from 98 kPa to 101.4 kPa (absolute). Actual flame temperatures are generally higher. The temperature may be as measured by a thermocouple, an optical pyrometer, or any other calibrated temperature measurement device known in the art for measuring furnace temperatures. The pressure may be as measured by any suitable pressure sensor known in the art, for example a pressure gauge as available from Mensor.

The fuel 82, 35 may be formed from a by-product gas 82 from a pressure swing adsorption unit 501 and a supplemental fuel 35. By-product gas from a pressure swing adsorption unit is often called pressure swing adsorber tail gas, and supplemental fuel is often called trim fuel. The by-product gas 82 and supplemental fuel 35 may be heated before being used as fuel. By-product gas 82 and supplemental fuel 35 may be blended and introduced together through a burner to the combustion section 203, or they may be introduced separately through different ports in the burner. Alternatively, the by-product gas 82 may be introduced through the primary burner and the supplemental fuel 35 may be introduced through lances near the burner.

The oxidant gas 99 is a gas containing oxygen and may be air, oxygen-enriched air, oxygen-depleted air such as gas turbine exhaust, industrial grade oxygen, or any other oxygen-containing gas known for use in a reformer furnace for combustion. For example, air 90 may be compressed in forced draft fan 212, heated in a heat exchanger (not shown), and passed to the reformer furnace 201 as oxidant gas 99.

Combustion product gas 100 may heat a number of different process streams in the convection section 204 of the reformer furnace 201. The combustion product gas 100 may heat the streams in various different configurations (order of heating). The combustion product gas 100 may then be passed to an induced draft fan 211 and exhausted.

The method comprises determining a steam flow rate at which carbon forms on an inner wall segment of the catalyst-containing reformer tube 202 at a first hydrogen production rate. The highest steam flow rate at which carbon forms on the inner wall segment may be termed a critical steam flow rate for wall-carbon formation.

Heavy hydrocarbons (i.e. C2+ hydrocarbons) in the reformer feed gas mixture thermally crack more easily than methane. It is expected that reformer feed gas mixtures with heavy hydrocarbons will more readily deposit carbon on the inner wall segment of the catalyst-containing reformer tube. Therefore the present method is particularly useful when heavy hydrocarbons are in the reformer feed gas mixture.

The steam flow rate at which carbon forms on the inner wall segment of the catalyst-containing reformer tube may be determined by:
measuring a sequence of temperatures of the process gas inside the catalyst-containing reformer tube at a first location inside the catalyst-containing reformer tube proximate the inner wall segment responsive to changes in the steam flow rate relative to the hydrocarbon-based carbon flow rate;
measuring a sequence of temperatures on an outer wall of the catalyst-containing reformer tube at a second location proximate the inner wall segment responsive to the changes in the steam flow rate relative to the hydrocarbon-based carbon flow rate; and
evaluating the sequence of temperatures of the process gas at the first location and the sequence of temperatures on the outer wall at the second location for temperatures indicative of carbon formation on the inner wall segment of the catalyst-containing reformer tube.

The first location may be within a distance of 0.5 m or 0.3 m of the inner wall segment. The second location may be within a distance of 0.5 m or 0.3 m of the inner wall segment

When carbon forms on the inner wall of a catalyst-containing reformer tube, the local temperature on the wall segment where carbon forms will increase and generate what may be described as a hot-band, a perceptibly noticeable high-temperature band on the tube wall.

The first location and the second location may be selected proximate the observed hot-band. The first location and the second location may be within a distance one from the other of at most 0.5 m or at most 0.3 m and/or at most 10% or at most 5% of the length of the catalyst-containing reformer tube. The distance is measured as a straight-line distance between the first location and the second location. The first location may be at any radial location within the tube, for example, in or near the center, or at or near the wall, or any place in between. The second location may be at any location on the outer wall without regard to the angular orientation of the first location.

The sequence of temperatures of the process gas inside the catalyst-containing reformer tube may be measured using a thermocouple inside the catalyst-containing reformer tube. The temperature of the process gas may be measured a multiple locations inside the catalyst-containing reformer tube, including the first location. The temperature of the process gas inside the catalyst-containing reformer tube may be measured using a Daily Thermetrics's CatTracker® probe, for example, as described in the article "Reformer monitoring via in-tube temperature measurement" by Smith IV et al. 2014 (www.diGitalrefininG.com/article/1000924).

The sequence of temperatures on the outer wall of the catalyst-containing reformer tube may be measured using an optical pyrometer, a camera as described for example in U.S. Pat. No. 8,300,880, or other known device for measuring reformer tube temperatures.

The steam flow rate relative to the hydrocarbon-based carbon flow rate may be systematically decreased while measuring a sequence of process gas temperatures inside the reformer tube and while measuring a sequence of reformer tube wall temperatures until a hot-band is detected. The sequence of process gas temperature and the sequence of reformer tube wall temperatures may be evaluated for an indication of carbon formation on the inner wall segment of the catalyst-containing reformer tube.

Carbon formation may be indicated by the reformer tube wall temperature exceeding the process gas temperature by greater than a selected difference while the process gas temperature remains less than a selected value. Temperatures indicative of carbon formation result from an increased thermal resistance due to carbon formation on the inner surface of the reformer tube wall.

The inventors have discovered that hot-banding due to wall carbon formation can be distinguished from hot-banding due to carbon formation on or in the catalyst pellets.

When carbon forms on or in the catalyst pellets, the activity of the catalyst pellets decreases. When the activity of the catalyst decreases, the rate of reaction of the process gas decreases. For a given heat flux on the reformer tube, a decreased rate of reaction will result in an increase of process gas temperature since the reforming reaction is endothermic. The reaction of the process gas is not absorbing as much heat, resulting in an increase in process gas temperature. As the process gas temperature inside the tube increases, the reformer tube wall temperature correspondingly increases for the given heat flux.

The basic heat transfer equation, *q* = *h*×(*T_{wall}* - *T_{gas}*), where q is the heat flux, *h* is an overall heat transfer coefficient, *T_{wall}* is the wall temperature, and *T_{gas}* is the process gas temperature can be rewritten to express the wall temperature in terms of the other terms as *T_{wall}* = *T_{gas}* + *q* / *h.* The heat flux and the overall heat transfer coefficient can be assumed to remain roughly constant, so the temperature of the reformer tube wall, *T_{wall},* can be expected to increase as the process gas temperature, *T_{gas}* increases.

When carbon is formed on the wall of the catalyst-containing reformer tube, the activity of the catalyst pellets remains unchanged and the reaction rate of the process gas remains relatively unchanged for a given heat flux. The temperature of the wall will increase due to the increased thermal resistance caused by the carbon on the inner wall of the reformer tube. The temperature of the process gas will be about the same or may slightly decrease, while the reformer tube wall temperature will substantially increase when hot-banding is caused by wall carbon formation.

From the basic heat transfer equation, *T_{wall}* = *T_{gas}* + *q* / *h,* as the thermal resistance increases due to carbon formation on the inner wall of the reformer tube (overall heat transfer coefficient, *h*, decreases), the reformer tube wall temperature is expected to increase.

The differences in the temperature responses due to the different mechanisms can be readily recognized.

A systematic approach may be undertaken to determine the steam flow rate for carbon formation on the inner wall of the catalyst-containing reformer tube.

The sequence of temperatures of the process gas which are measured may comprise multiple subsequences including a first subsequence and a second subsequence, and the sequence of temperatures on the outer wall which are measured may comprise multiple subsequences including a first subsequence and a second subsequence.

A "subsequence" is a sequence that is part of another sequence.

The first subsequence of temperatures of the process gas may be measured at the first location inside the catalyst-containing reformer tube during a first time period when a first quantity of the reformer feed gas mixture is introduced into the catalyst-containing reformer tube. The first quantity of the reformer feed gas mixture may have a steam-to-carbon molar ratio with a first mean value. The first mean value of the steam-to-carbon molar ratio is selected to be greater than a critical value for wall carbon formation.

The steam-to-carbon molar ratio is defined as the flow rate of steam on a molar basis divided by the molar flow rate of hydrocarbon-based carbon on a molar basis.

The first subsequence of temperatures on the outer wall of the catalyst-containing reformer tube may be measured at the second location during the first time period when the first quantity of the reformer feed gas mixture is introduced into the catalyst-containing reformer tube.

During the first time period, since the first mean value of the steam-to-carbon molar ratio is greater than the critical value for wall carbon formation, the first subsequence of temperatures on the outer wall of the catalyst-containing reformer tube exceed the first subsequence of temperatures of the process gas by an amount indicative of no carbon formation on the inner wall segment of the catalyst-containing reformer tube, and the first subsequence of temperatures of the process gas are within a range indicative of no carbon formation on the inner wall segment of the catalyst-containing reformer tube. The difference between the temperature of the outer wall of catalyst-containing reformer tube and the process gas which is indicative of no carbon formation will depend upon a number of factors including the hydrogen production rate, hydrocarbon feedstock composition, and variations in fuel composition.

The steam-to-carbon molar ratio may be systematically decreased until a second mean value of the steam-to-carbon molar ratio is reached where carbon is formed on the inner wall of the reformer tube, i.e. at or below the so-called critical value of the steam-to-carbon molar ratio. The second subsequence of temperatures of the process gas and the second subsequence of temperatures on the outer wall of the catalyst-containing reformer tube are measured when the steam-to-carbon molar ratio is at or below the critical steam-to-carbon molar ratio and are measured during a second time period when a second quantity of the reformer feed gas mixture is introduced into the catalyst-containing reformer tube. During the second time period, since the second mean value of the steam-to-carbon molar ratio is at or below the critical value for wall carbon formation, the second subsequence of temperatures on the outer wall of the catalyst-containing reformer tube exceed the second subsequence of temperatures of the process gas by an amount indicative of carbon formation on the inner wall segment of the catalyst-containing reformer tube, and the second subsequence of temperatures of the process gas are within a range indicative of carbon formation on the inner wall segment of the catalyst-containing reformer tube. The difference between the temperature of the outer wall of catalyst-containing reformer tube and the process gas which is indicative of carbon formation will depend upon a number of factors including the hydrogen production rate, hydrocarbon feedstock composition, and variations in fuel composition. As mentioned before, the temperature of the process gas may be about the same or may slightly decrease, while the reformer tube wall temperature will substantially increase when hot-banding is caused by wall carbon formation. The second subsequence of temperatures of the process gas may accordingly be within the range indicative of no carbon formation on the inner wall segment of the catalyst-containing reformer tube during the first time period.

After determining the steam flow rate at which carbon forms for a given hydrogen production rate, the method comprises controlling the steam flow rate relative to the hydrocarbon-based carbon flow rate responsive to determining the steam flow rate at which carbon forms on the inner wall segment of the catalyst-containing reformer tube 202.

The steam flow rate may be controlled to provide the lowest steam necessary to operate with some carbon formation on the inner surface of the reformer tube or slightly greater so that no carbon is formed on the inner surface of the reformer tube.

The propensity for carbon formation in or on the catalyst as described in WO 2013/002752 may also be determined and the steam flow rate controlled responsive to both mechanisms for carbon formation.

Subsequent to systematically determining the critical steam flow rate in the first time period and the second time period, the steam flow rate may be controlled during a subsequent third time period when a third quantity of the reformer feed gas mixture is introduced into the catalyst-containing reformer tube. The third quantity of the reformer feed gas mixture may have a steam-to-carbon molar ratio with a third mean value, where the third mean value is greater than or equal to the second mean value and less than or equal to the second mean value plus 0.2.

Operating with the minimum amount of steam provides improved energy efficiency for the steam-hydrocarbon reforming process.

In order to produce a hydrogen-containing product gas, the method may further comprise separating a pressure swing adsorption unit feed 81 in a pressure swing adsorption unit 501 to form the hydrogen-containing product gas 30 and a pressure swing adsorption unit by-product gas 82, where the adsorption unit feed 81 is formed from at least a portion of the reformate 25 from the catalyst-containing tube 202 and where the fuel 35, 82 comprises at least a portion of the pressure swing adsorption unit by-product gas 82.

### Example

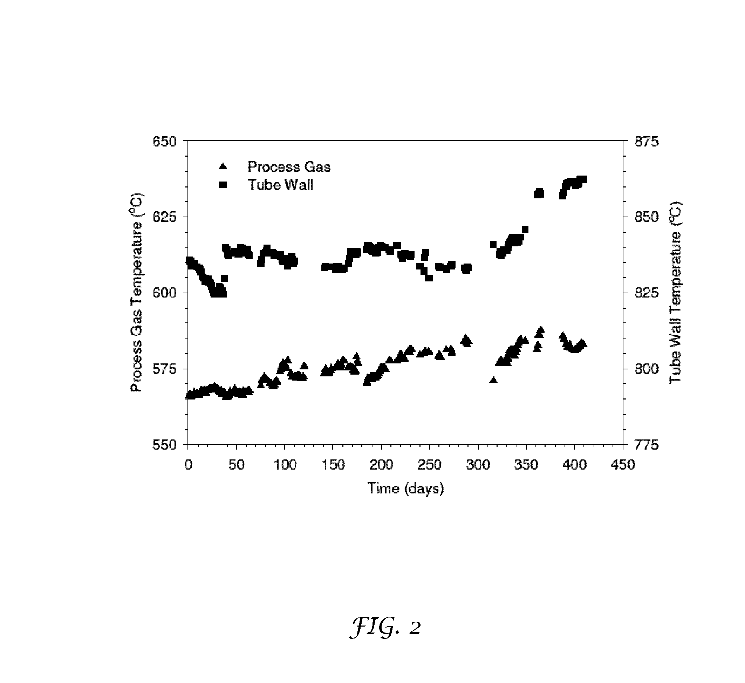

FIG. 2 shows temperature data acquired from an operating reformer furnace. The temperature of the process gas inside the catalyst-containing reformer tube was measured using a Daily Thermetrics' CatTracker® probe and the tube wall temperature was measured using a fixed optical pyrometer. The process gas temperature and the tube wall temperature are plotted versus time.

The process gas data is represented by triangles and the tube wall temperatures by squares. The y-axis for the process gas temperatures is on the left side of the graph and the y-axis for the tube wall temperatures is on the right side of the graph. Time, in days, is plotted on the x-axis.

Over a period of months, the steam-to-carbon molar ratio was systematically decreased.

From day 1 to day 350, the process gas temperature rose somewhat steadily from a temperature of about 565°C to about 585°C, while the tube wall temperature varied within a temperature range from about 825°C to about 845°C. At about day 360, the tube wall temperature increased significantly, about 18°C, while the process gas temperature remained about the same or decreased slightly thereby indicating the presence of tube wall carbon.

Before carbon formed on the tube wall, about days 320 to 340 the temperature difference between the tube wall and the process gas was about 260°C. After carbon formed on the tube wall, about days 360 to 410, the temperature difference between the tube wall and the process gas was about 280 to 283°C.

The target steam-to-carbon molar ratio can then be set and the steam flow rate controlled responsive to determining the steam flow rate where wall carbon is formed.

## Claims

1. A method of operating a catalytic steam-hydrocarbon reformer, the method comprising:
introducing a reformer feed gas mixture (15) comprising at least one hydrocarbon and steam into a catalyst-containing reformer tube (202) in a reformer furnace (201), the reformer feed gas mixture (15) having a hydrocarbon-based carbon flow rate and a steam flow rate where the steam flow rate relative to the hydrocarbon-based carbon flow rate in the reformer feed gas mixture can be changed, reacting the reformer feed gas mixture (15) in a reforming reaction under reaction conditions effective to form a reformate (25) comprising H₂, CO, CH₄, and H₂O, and withdrawing the reformate (25) from the catalyst-containing tube (202);
combusting a fuel (35, 82) with an oxidant gas (99) in a combustion section (203) of the reformer furnace (201) external to the catalyst-containing reformer tube (202) under conditions effective to combust the fuel (35, 82) to form a combustion product gas (100) and generate heat to supply energy for reacting the reformer feed gas mixture (15) inside the catalyst-containing reformer tube (202), and withdrawing the combustion product gas (100) from the combustion section (203);
determining a steam flow rate at which carbon forms on an inner wall segment of the catalyst-containing reformer tube (202) at a first hydrogen production rate; and controlling the steam flow rate responsive to determining the steam flow rate at which carbon forms on the inner wall segment of the catalyst-containing reformer tube (202).

2. The method of claim 1 wherein the reformer feed gas mixture (15) is reacted as a process gas in the catalyst-containing reformer tube (202); and
wherein the step of determining the steam flow rate at which carbon forms on the inner wall segment of the catalyst-containing reformer tube (202) comprises:
measuring a temperature of the process gas at a first location inside the catalyst-containing reformer tube (202) proximate the inner wall segment;
measuring a temperature on an outer wall of the catalyst-containing reformer tube (202) at a second location proximate the inner wall segment; and
evaluating the temperature of the process gas at the first location and the temperature on the outer wall at the second location for temperatures indicative of carbon formation on the inner wall segment of the catalyst-containing reformer tube (202).

3. The method of claim 1 or claim 2 wherein the reformer feed gas mixture (15) is reacted as a process gas in the catalyst-containing reformer tube (202); and
wherein the step of determining the steam flow rate at which carbon forms on the inner wall segment of the catalyst-containing reformer tube (202) comprises:
measuring a sequence of temperatures of the process gas at a first location inside the catalyst-containing reformer tube (202) proximate the inner wall segment responsive to changes in the steam flow rate relative to the hydrocarbon-based carbon flow rate;
measuring a sequence of temperatures on an outer wall of the catalyst-containing reformer tube (202) at a second location proximate the inner wall segment responsive to the changes in the steam flow rate relative to the hydrocarbon-based carbon flow rate; and
evaluating the sequence of temperatures of the process gas at the first location and the sequence of temperatures on the outer wall at the second location for temperatures indicative of carbon formation on the inner wall segment of the catalyst-containing reformer tube (202).

4. The method of claim 2 or claim 3 wherein the temperatures indicative of carbon formation on the inner wall segment of the catalyst-containing reformer tube (202) comprise a wall temperature exceeding a process gas temperature by greater than a selected difference while the process gas temperature is less than a selected value.

5. The method of any one of the claims 2 to 4 wherein the first location and the second location are within a distance one from the other of at most 0.5 m and/or at most 10% of the length of the catalyst-containing reformer tube.

6. The method of any one of the claims 2 to 4 wherein the first location and the second location are within a distance one from the other of at most 0.3 m and/or at most 5% of the length of the catalyst-containing reformer tube.

7. The method of any one of the claims 2 to 6
wherein a first subsequence of temperatures of the process gas is measured at the first location inside the catalyst-containing reformer tube (202) during a first time period when a first quantity of the reformer feed gas mixture (15) is introduced into the catalyst-containing reformer tube (202), the first quantity of the reformer feed gas mixture (15) having a steam-to-carbon molar ratio with a first mean value, the sequence of temperatures of the process gas comprising the first subsequence of temperatures of the process gas;
wherein a first subsequence of temperatures on the outer wall of the catalyst-containing reformer tube (202) is measured at the second location during the first time period when the first quantity of the reformer feed gas mixture (15) is introduced into the catalyst-containing reformer tube (202), the sequence of temperatures on the outer wall comprising the first subsequence of temperatures on the outer wall;
wherein during the first time period, the first subsequence of temperatures on the outer wall of the catalyst-containing reformer tube (202) exceed the first subsequence of temperatures of the process gas by an amount indicative of no carbon formation on the inner wall segment of the catalyst-containing reformer tube (202), and the first subsequence of temperatures of the process gas are within a range indicative of no carbon formation on the inner wall segment of the catalyst-containing reformer tube (202);
wherein a second subsequence of temperatures of the process gas is measured at the first location inside the catalyst-containing reformer tube (202) during a second time period when a second quantity of the reformer feed gas mixture (15) is introduced into the catalyst-containing reformer tube (202), the second quantity of the reformer feed gas mixture (15) having a steam-to-carbon molar ratio with a second mean value, the second mean value less than the first mean value, the sequence of temperatures of the process gas comprising the second subsequence of temperatures of the process gas;
wherein a second subsequence of temperatures on the outer wall of the catalyst-containing reformer tube (202) is measured at the second location during the second time period when the second quantity of the reformer feed gas mixture (15) is introduced into the catalyst-containing reformer tube (202), the sequence of temperatures on the outer wall comprising the second subsequence of temperatures on the outer wall; and
wherein during the second time period, the second subsequence of temperatures on the outer wall of the catalyst-containing reformer tube (202) exceed the second subsequence of temperatures of the process gas by an amount indicative of carbon formation on the inner wall segment of the catalyst-containing reformer tube (202), and the second subsequence of temperatures of the process gas are within a range indicative of carbon formation on the inner wall segment of the catalyst-containing reformer tube (202) thereby determining the steam flow rate at which carbon forms on the inner wall segment of the catalyst-containing reformer tube (202).

8. The method of claim 7 wherein the steam flow rate is controlled in the step of controlling the steam flow rate during a third time period when a third quantity of the reformer feed gas mixture (15) is introduced into the catalyst-containing reformer tube (202), the third quantity of the reformer feed gas mixture (15) having a steam-to-carbon molar ratio with a third mean value, where the third mean value is greater than or equal to the second mean value and less than or equal to the second mean value plus 0.2.

9. The method of any one of the preceding claims further comprising:
separating a pressure swing adsorption unit feed in a pressure swing adsorption unit (501) to form a hydrogen-containing product gas (30) and a pressure swing adsorption unit by-product gas (82), where the adsorption unit feed is formed from at least a portion of the reformate (25) from the catalyst-containing tube and where the fuel comprises at least a portion of the pressure swing adsorption unit by-product gas.
